# EUROPEAN PATENT SPECIFICATION

(11) **EP 3 025 036 B1**
(45) Date of publication and mention of the grant of the patent: **27.02.2019**
(21) Application number: 14747708.7
(22) Date of filing: 07.07.2014
(51) Int. Cl.: F01N 3/20

(54) **SCR EXHAUST EMISSION CONTROL SYSTEM AND METHOD THEREFORE, FOR FILLING THE UREA REDUCING AGENT AFTER RETURNING TO THE TANK**
SCR-ABGASEMISSIONSSTEUERUNGSSYSTEM UND VERFAHREN DAFÜR ZUM AUFFÜLLEN DES HARNSTOFF-REDUKTIONSMITTELS NACH RÜCKFÜHRUNG IN DEN TANK
SYSTÈME DE RÉGULATION D'ÉMISSIONS D'ÉCHAPPEMENT À RÉDUCTION CATALYTIQUE SÉLECTIVE (SCR) ET PROCÉDÉ CORRESPONDANT, POUR UN REMPLISSAGE DE L'AGENT DE RÉDUCTION D'URÉE APRÈS LE RETOUR VERS LE RÉSERVOIR

(30) Priority: 26.07.2013 JP 2013155414
(43) Date of publication of application: 01.06.2016
(73) Proprietor: TOYOTA JIDOSHA KABUSHIKI KAISHA, Toyota-shi, Aichi-ken 471-8571 (JP)
(72) Inventor: NAGAI, Atsushi, Toyota-shi Aichi-ken 471-8571 (JP); OTA, Hirohiko, Toyota-shi Aichi-ken 471-8571 (JP)
(74) Representative: Intès, Didier Gérard André
(86) International application number: PCT/IB2014/001281
(87) International publication number: WO 2015/011532

(56) References cited:
- EP-A1- 2 166 208
- EP-A1- 2 578 834
- EP-A2- 2 682 579
- WO-A1-2013/047032
- JP-A- 2010 101 262

## Description

### BACKGROUND OF THE INVENTION

### 1. Field of the Invention

The invention relates to an exhaust emission control system for an internal combustion engine, and a control method for the exhaust emission control system.

### 2. Description of Related Art

For example, as is described in Japanese Patent Application Publication No. 2008-101564 (JP 2008-101564 A), there is known an exhaust emission control system for an internal combustion engine. The exhaust mission control system includes a selective reduction NOx catalyst and a reducing agent supply mechanism. The selective reduction NOx catalyst purifies nitrogen oxides (NOx) in exhaust gas. The reducing agent supply mechanism supplies a reducing agent into an exhaust passage. The reducing agent is utilized to purify NOx in this selective reduction NOx catalyst.

In this exhaust emission control system, urea aqueous solution is injected from a supply passage of the reducing agent supply mechanism toward the exhaust passage. The injected urea aqueous solution changes into ammonia by the hydrolysis of urea due to the heat of exhaust gas. Then, the ammonia is supplied to the selective reduction NOx catalyst as the reducing agent.

Incidentally, reducing agent is supplied to an addition valve through the supply passage during engine operation, so the inside of the addition valve is filled with reducing agent. When the engine operation is stopped, supply of reducing agent is also stopped; however, reducing agent remains in the addition valve. Therefore, if the residual reducing agent freezes, there is a concern that the addition valve undergoes damage.

Therefore, in order to suppress such residual reducing agent in the addition valve, the system described in JP 2008-101564 A recovers reducing agent from the addition valve after an engine stop.
A method for removing foreign matter and a selective-reduction catalyst system are also described in WO2013/047032.

### SUMMARY OF THE INVENTION

When reducing agent is recovered from the addition valve after an engine stop, no reducing agent is injected from the addition valve until the inside of the addition valve is filled with reducing agent after the next engine start. Therefore, when reducing agent is recovered, it is desirable to fill reducing agent into the addition valve previously in advance of an injection of reducing agent for purifying exhaust gas after the next engine start.

However, if reducing agent is previously filled into the addition valve in this way, there is a concern that the following inconvenience occurs. That is, when a time from an engine start to an engine stop is relatively short, there is a possibility that reducing agent filled in the addition valve is recovered without being injected.

In this case, there is a concern that reducing agent adheres to the distal end of the addition valve at the time of filling the reducing agent and then remains at the distal end. There is also a concern that a small amount of reducing agent remains in the addition valve even when reducing agent is recovered. The reducing agent remaining at the distal end or inside of the addition valve in this way may form a deposit thereafter and may cause a malfunction of the addition valve.

Formation of a deposit of reducing agent at the distal end or inside of the addition valve is remarkable through a repetition of engine operation having a relatively short time from an engine start to an engine stop. The invention provides an exhaust emission control system for an internal combustion engine and a control method for the exhaust emission control system, which suppress formation of a deposit at an addition valve that adds reducing agent.

A first aspect of the invention provides an exhaust emission control system for an internal combustion engine according to claim 1. The exhaust emission control system includes a catalyst, a reducing agent supply mechanism, and an electronic control unit. The catalyst is provided in an exhaust passage of the internal combustion engine, and is configured to purify exhaust gas by being supplied with reducing agent. The reducing agent supply mechanism has an addition valve configured to inject the reducing agent to the exhaust passage. The reducing agent supply mechanism is configured to supply the reducing agent to the addition valve and recover the reducing agent from the addition valve. The electronic control unit is configured to control an operation of the reducing agent supply mechanism. The electronic control unit is configured to execute a filling process of filling the reducing agent into the addition valve by supplying the reducing agent to the addition valve in a state where a temperature of the addition valve is higher than or equal to a boiling point of the reducing agent.

According to the first aspect of the invention, filling of the reducing agent into the addition valve is started when the temperature of the addition valve is higher than or equal to the boiling point of the reducing agent. Therefore, even when the reducing agent adheres to the distal end of the addition valve at the time of filling the reducing agent into the addition valve, the adhered reducing agent vaporizes, so the reducing agent remaining at the distal end of the addition valve is suppressed. In addition, even when a small amount of the reducing agent remains in the addition valve at the time when the reducing agent is recovered, the residual reducing agent vaporizes, so the reducing agent remaining in the addition valve is suppressed. In this way, with the above configuration, the reducing agent remaining at the distal end or inside the addition valve is suppressed, so it is possible to suppress formation of a deposit due to the residual reducing agent. In the above configuration, the temperature of the addition valve is not necessarily strictly higher than or equal to the boiling point of the reducing agent. That is, when the temperature of the addition valve is higher than or equal to a temperature near the boiling point of the reducing agent, vaporization of the reducing agent remaining in the addition valve is facilitated, so the above-described operation and advantageous effect are obtained.

In the exhaust emission control system according to the first aspect of the invention, the electronic control unit may be configured to estimate the temperature of the addition valve, and execute the filling process when the estimated temperature is higher than or equal to the boiling point of the reducing agent.

With the above configuration, it is possible to appropriately execute the filing process on the basis of the estimated temperature of the addition valve. The temperature of the addition valve may be actually detected by a sensor, or the like. The temperature of the addition valve may be estimated on the basis of an exhaust gas temperature, an exhaust gas flow rate, an outside air temperature, and the like. When the exhaust emission control system for an internal combustion engine is mounted on a vehicle, it is possible to raise the accuracy of estimating the temperature of the addition valve additionally in consideration of a vehicle speed.

In the exhaust emission control system according to the first aspect of the disclosure, the electronic control unit may be configured to execute the filling process when the temperature of the catalyst is higher than or equal to an activation temperature of the catalyst. When the temperature of the catalyst is higher than or equal to the activation temperature, an exhaust system is in a high temperature state, so the temperature of the addition valve is highly likely to be higher than or equal to the boiling point of the reducing agent. Therefore, in the above configuration, the reducing agent is filled at the time when the temperature of the catalyst is higher than or equal to the activation temperature. With this configuration as well, it is possible to fill the reducing agent into the addition valve when the temperature of the addition valve is higher than or equal to the boiling point of the reducing agent. The temperature of the catalyst may be actually detected by a sensor, or the like. The temperature of the catalyst may be estimated on the basis of an exhaust gas temperature, an exhaust gas flow rate, an outside air temperature, and the like. When the exhaust emission control system for an internal combustion engine is mounted on a vehicle, it is possible to raise the accuracy of estimating the temperature of the catalyst additionally in consideration of a vehicle speed.

In the exhaust emission control system according to the first aspect of the disclosure, the electronic control unit may be configured to execute the filling process when an elapsed time from a start of the engine is longer than or equal to a predetermined time.

When the elapsed time from a start of the engine is long to some extent, the exhaust system is in a high temperature state because of combustion gas, so the temperature of the addition valve is highly likely to be higher than or equal to the boiling point of the reducing agent. Therefore, in the above configuration, the reducing agent is filled at the time when the elapsed time from a start of the engine is longer than or equal to a predetermined time. With this configuration as well, it is possible to fill the reducing agent into the addition valve when the temperature of the addition valve is higher than or equal to the boiling point of the reducing agent.

In the exhaust emission control system according to the first aspect of the invention, the electronic control unit may be configured to execute the filling process before an injection of the reducing agent for purifying exhaust gas is started. With this configuration, the reducing agent is filled into the addition valve in advance of an injection of the reducing agent for purifying exhaust gas. Thus, when the reducing agent for purifying exhaust gas is injected, it is possible to inject the reducing agent immediately in association with an opening operation of the addition valve. Therefore, for example, when an injection amount of the reducing agent is estimated on the basis of an opening duration of the addition valve, it is possible to raise the accuracy of estimating the injection amount.

In the exhaust emission control system according to the first aspect of the invention, the electronic control unit may be configured to recover the reducing agent from the addition valve after a stop of the engine and execute the filling process at a start of the engine. With this configuration, the reducing agent is recovered from the addition valve after a stop of the engine, so it is possible to suppress damage to the addition valve due to freeze of the reducing agent remaining in the addition valve. At a start of the engine, the filling process of filling the reducing agent into the addition valve is executed, so it is possible to previously fill the reducing agent into the addition valve in advance of an injection of the reducing agent for purifying exhaust gas, which is carried out after the start of the engine.

A second aspect of the invention provides a control method for an exhaust emission control system for an internal combustion engine. The exhaust emission control system includes a catalyst and a reducing agent supply mechanism. The catalyst is provided in an exhaust passage of the internal combustion engine, and is configured to purify exhaust gas by being supplied with reducing agent. The reducing agent supply mechanism has an addition valve configured to inject the reducing agent to the exhaust passage, and is configured to supply the reducing agent to the addition valve and recover the reducing agent from the addition valve. The control method includes executing a filling process of filling the reducing agent into the addition valve by supplying the reducing agent to the addition valve with the use of the reducing agent supply mechanism in a state where a temperature of the addition valve is higher than or equal to a boiling point of the reducing agent.

In the control method according to the second aspect of the invention, the filling process may be executed when the temperature of the addition valve is estimated and then the estimated temperature is higher than or equal to the boiling point of the reducing agent.

In the control method according to the second aspect of the disclosure, the filling process may be executed when the temperature of the catalyst is higher than or equal to an activation temperature of the catalyst.

In the control method according to the second aspect of the disclosure, the filling process may be executed when an elapsed time from a start of the engine is longer than or equal to a predetermined time.

In the control method according to the second aspect of the invention, the filling process may be executed before an injection of the reducing agent for purifying exhaust gas is started.

In the control method according to the second aspect of the invention, the reducing agent may be recovered from the addition valve after a stop of the engine, and the filling process may be executed at a start of the engine.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view that shows an internal combustion engine and its peripheral configuration according to an embodiment of an exhaust emission control system for an internal combustion engine;
FIG. 2 is a schematic view that shows the configuration of a urea aqueous solution supply mechanism;
FIG. 3 is a flowchart that shows the procedure of the process of recovering urea aqueous solution;
FIG. 4 is a flowchart that shows the procedure of the process of filling urea aqueous solution;
FIG. 5 is a graph that shows a mode in which a distal end temperature of a urea aqueous solution addition valve is estimated;
FIG. 6 is a flowchart that shows the procedure of the process of filling urea aqueous solution according to an alternative embodiment to the above embodiment; and
FIG. 7 is a flowchart that shows the procedure of the process of filling urea aqueous solution according to another alternative embodiment to the above embodiment.

### DETAILED DESCRIPTION OF EMBODIMENTS

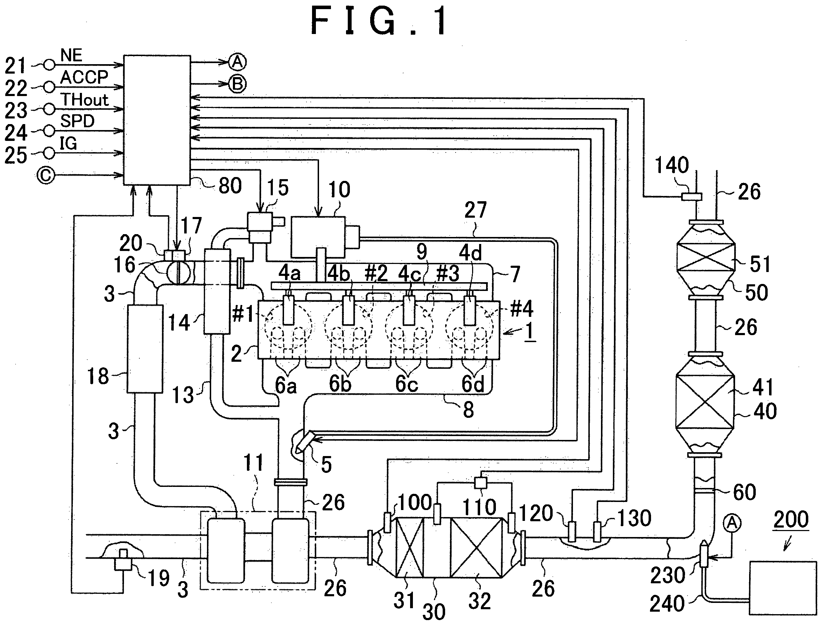

Hereinafter, an example embodiment of an exhaust emission control system for an internal combustion engine will be described with reference to FIG. 1 to FIG. 5. FIG. 1 shows the configuration of a diesel engine (hereinafter, simply referred to as" engine") that is an internal combustion engine to which the exhaust emission control system is applied and the configuration of the exhaust emission control system provided in the engine 1.

The engine 1 includes a plurality of cylinders #1 to #4. A plurality of fuel injection valves 4a to 4d are provided at a cylinder head 2 in correspondence with the cylinders #1 to #4. These fuel injection valves 4a to 4d inject fuel into combustion chambers of the respective cylinders #1 to #4. The cylinder head 2 has intake ports and exhaust ports 6a to 6d in correspondence with the respective cylinders #1 to #4. The intake ports are respectively used to introduce fresh air into the cylinders. The exhaust ports 6a to 6d are respectively used to emit combustion gas to the outside of the cylinders.

The fuel injection valves 4a to 4d are connected to a common rail 9 that accumulates high-pressure fuel. The common rail 9 is connected to a supply pump 10. The supply pump 10 draws fuel in a fuel tank, and supplies high-pressure fuel to the common rail 9. High-pressure fuel supplied to the common rail 9 is injected from the fuel injection valves 4a to 4d into the corresponding cylinders at the time when the fuel injection valves 4a to 4d are open.

An intake manifold 7 is connected to the intake ports. The intake manifold 7 is connected to an intake passage 3. An intake air throttle valve 16 is provided in the intake passage 3. The intake air throttle valve 16 is used to adjust an intake air flow rate.

An exhaust manifold 8 is connected to the exhaust ports 6a to 6d. The exhaust manifold 8 is connected to an exhaust passage 26. A turbocharger 11 is provided in the exhaust passage 26. The turbocharger 11 supercharges intake air that is introduced into the cylinders by utilizing exhaust pressure. An intercooler 18 is provided in the intake passage 3 between an intake-side compressor of the turbocharger 11 and the intake air throttle valve 16. The intercooler 18 cools intake air of which the temperature is raised through supercharging of the turbocharger 11.

A first purification member 30 that purifies exhaust gas is provided downstream of an exhaust-side turbine of the turbocharger 11 in the exhaust passage 26. An oxidation catalyst 31 and a filter 32 are arranged inside the first purification member 30 in series in a direction in which exhaust gas flows.

A catalyst is supported on the oxidation catalyst 31. The catalyst oxidizes HC in exhaust gas. The filter 32 is a member that traps particulate matter (PM) in exhaust gas. The filter 32 is formed of porous ceramics. A catalyst is supported on the filter 32. The catalyst is used to facilitate oxidation of PM. PM in exhaust gas is trapped at the time when exhaust gas passes through the porous wall of the filter 32.

A fuel addition valve 5 is provided near a collecting portion of the exhaust manifold 8. The fuel addition valve 5 is used to supply fuel to the oxidation catalyst 31 or the filter 32 as an additive. The fuel addition valve 5 is connected to the supply pump 10 via a fuel supply tube 27. The arrangement location of the fuel addition valve 5 may be changed as needed as long as the location is in an exhaust system upstream of the first purification member 30. Fuel may be supplied to the oxidation catalyst 31 or the filter 32 as an additive through post injection by adjusting fuel injection timing.

When the amount of PM trapped by the filter 32 exceeds a predetermined value, the process of regenerating the filter 32 is started. Thus, fuel is injected from the fuel addition valve 5 into the exhaust manifold 8. Fuel injected from the fuel addition valve 5 burns as it reaches the oxidation catalyst 31. Thus, the exhaust gas temperature is raised. Exhaust gas raised in temperature by the oxidation catalyst 31 flows into the filter 32, so the temperature of the filter 32 is raised. Thus, PM deposited in the filter 32 is oxidized, and the filter 32 is regenerated.

A second purification member 40 that purifies exhaust gas is provided in the exhaust passage 26 downstream of the first purification member 30 in the exhaust gas flow direction. A selective reduction NOx catalyst (hereinafter, referred to as SCR catalyst) 41 is arranged inside the second purification member 40. The SCR catalyst 41 reduces and purifies NOx in exhaust gas by utilizing reducing agent.

Furthermore, a third purification member 50 that purifies exhaust gas is provided in the exhaust passage 26 downstream of the second purification member 40 in the exhaust gas flow direction. An ammonia oxidation catalyst 51 is arranged inside the third purification member 50. The ammonia oxidation catalyst 51 purifies ammonia in exhaust gas.

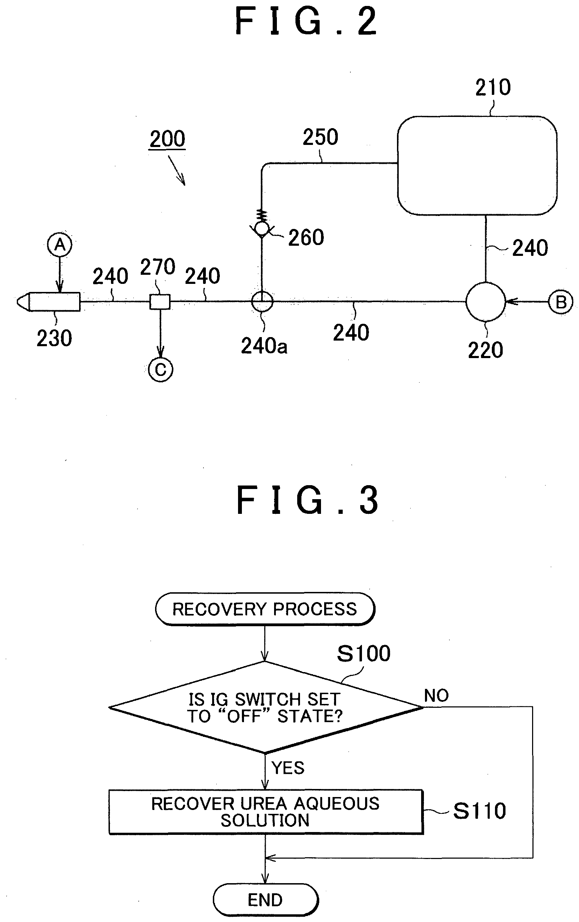

The engine 1 includes a urea aqueous solution supply mechanism 200 as a reducing agent supply mechanism that supplies reducing agent to the SCR catalyst 41. As shown in FIG. 2, the urea aqueous solution supply mechanism 200 includes a tank 210, a urea aqueous solution addition valve 230, a supply passage 240 and a pump 220. The tank 210 stores urea aqueous solution. The urea aqueous solution addition valve 230 injects and supplies urea aqueous solution into the exhaust passage 26. The supply passage 240 connects the urea aqueous solution addition valve 230 to the tank 210. The pump 220 is provided in the supply passage 240. The urea aqueous solution supply mechanism 200 further includes a return passage 250, a check valve 260 and a pressure sensor 270. The return passage 250 returns urea aqueous solution, discharged from the pump 220, to the tank 210. The check valve 260 is provided in the return passage 250. The pressure sensor 270 detects a urea aqueous solution pressure NP in the supply passage 240.

The return passage 250 is a passage that is branched off from the supply passage 240 between the pump 220 and the urea aqueous solution addition valve 230, and the branched passage is connected to the tank 210. The check valve 260 interrupts flow of urea aqueous solution from the tank 210 to the supply passage 240 in the return passage 250. The check valve 260 opens when the pressure in the supply passage 240 becomes higher than or equal to a prescribed pressure. When the check valve 260 opens in this way, flow of urea aqueous solution from the supply passage 240 to the tank 210 is allowed in the return passage 250.

The pressure sensor 270 is provided in the supply passage 240 at a portion between a branching portion 240a and the urea aqueous solution addition valve 230. The return passage 250 is branched off at the branching portion 240a. The pump 220 is an electric pump. When the pump 220 rotates in the forward direction, the pump 220 feeds urea aqueous solution from the tank 210 to the urea aqueous solution addition valve 230. In contrast, when the pump 220 rotates in the reverse direction, the pump 220 feeds urea aqueous solution from the urea aqueous solution addition valve 230 to the tank 210. That is, when the pump 220 rotates in the reverse direction, urea aqueous solution is recovered from the urea aqueous solution addition valve 230 and the supply passage 240, and is returned to the tank 210.

As shown in FIG. 1, the urea aqueous solution addition valve 230 is provided in the exhaust passage 26 between the first purification member 30 and the second purification member 40, and an injection hole of the urea aqueous solution addition valve 230 is directed toward the SCR catalyst 41. When the urea aqueous solution addition valve 230 is opened and the pump 220 is driven, urea aqueous solution is injected and supplied from the tank 210 into the exhaust passage 26 via the supply passage 240.

A dispersion plate 60 is provided in the exhaust passage 26 between the urea aqueous solution addition valve 230 and the SCR catalyst 41. The dispersion plate 60 facilitates atomization of urea aqueous solution by dispersing the urea aqueous solution injected from the urea aqueous solution addition valve 230.

Urea aqueous solution injected from the urea aqueous solution addition valve 230 changes into ammonia by the hydrolysis of urea due to the heat of exhaust gas. Then, the ammonia is supplied to the SCR catalyst 41 as a reducing agent for NOx. Ammonia supplied to the SCR catalyst 41 is occluded in the SCR catalyst 41, and is utilized to reduce NOx.

Other than the above, the engine 1 includes an exhaust gas recirculation device (hereinafter, referred to as EGR device). The EGR device decreases a combustion temperature in the cylinders by introducing part of exhaust gas into intake air, thus reducing the amount of NOx generated. The exhaust gas recirculation device includes an EGR passage 13, an EGR valve 15, an EGR cooler 14, and the like. The EGR passage 13 provides fluid communication between the intake passage 3 and the exhaust manifold 8. The EGR valve 15 is provided in the EGR passage 13. An exhaust gas recirculation amount, that is, an EGR amount, by which exhaust gas is introduced from the exhaust passage 26 to the intake passage 3, is regulated by adjusting the opening degree of the EGR valve 15. The temperature of exhaust gas flowing through the EGR passage 13 is decreased by the EGR cooler 14.

Various sensors for detecting engine operating states are attached to the engine 1. For example, an air flow meter 19 detects an intake air flow rate GA. A throttle valve opening degree sensor 20 detects the opening degree of the intake air throttle valve 16. An engine rotation speed sensor 21 detects the rotation speed of a crankshaft, that is, an engine rotation speed NE. An accelerator sensor 22 detects the depression amount of an accelerator pedal, that is, an accelerator operation amount ACCP. An outside air temperature sensor 23 detects an outside air temperature THout. A vehicle speed sensor 24 detects the vehicle speed SPD of a vehicle on which the engine 1 is mounted. An ignition switch (hereinafter, referred to as IG switch) 25 is also connected to the engine 1. The IG switch 25 is operated when the driver of the vehicle starts or stops the engine 1. The engine is started or stopped in accordance with the operating position of the IG switch 25.

A first exhaust gas temperature sensor 100 is provided upstream of the oxidation catalyst 31 in the exhaust gas flow direction. The first exhaust gas temperature sensor 100 detects a first exhaust gas temperature TH1. The first exhaust gas temperature TH1 is the temperature of exhaust gas that has not yet flowed into the oxidation catalyst 31. A differential pressure sensor 110 detects a pressure difference ΔP in exhaust gas pressure. The pressure difference ΔP is a pressure difference between an exhaust gas pressure upstream of the filter 32 in the exhaust gas flow direction and an exhaust gas pressure downstream of the filter 32 in the exhaust gas flow direction. A second exhaust gas temperature sensor 120 and a first NOx sensor 130 are provided upstream of the urea aqueous solution addition valve 230 in the exhaust passage 26 between the first purification member 30 and the second purification member 40. The second exhaust gas temperature sensor 120 detects a second exhaust gas temperature TH2. The second exhaust gas temperature TH2 is the temperature of exhaust gas that has not yet flowed into the SCR catalyst 41. The first NOx sensor 130 detects a first NOx concentration N1. The first NOx concentration N1 is a NOx concentration in exhaust gas that has not yet flowed into the SCR catalyst 41. A second NOx sensor 140 is provided in the exhaust passage 26 downstream of the third purification member 50 in the exhaust gas flow direction. The second NOx sensor 140 detects a second NOx concentration N2. The second NOx concentration N2 is the NOx concentration of exhaust gas purified by the SCR catalyst 41.

Outputs of the above-described various sensors, and the like, are input to a control device 80. The control device 80 constitutes an electronic control unit. The control device 80 is mainly formed of a microcomputer that includes a central processing unit (CPU), a read only memory (ROM), a random access memory (RAM), a timer counter, an input interface, an output interface, and the like. The ROM stores various programs, maps, and the like, in advance. The RAM temporarily stores computed results of the CPU, and the like.

Various controls over the engine 1 are executed by the control device 80. The various controls, for example, include fuel injection control over the fuel injection valves 4a to 4d or the fuel addition valve 5, discharge pressure control over the supply pump 10, driving amount control over an actuator 17 that opens or closes the intake air throttle valve 16, opening degree control over the EGR valve 15, and the like. The control device 80 also executes various exhaust gas purification controls, such as the above-described regeneration process for burning PM trapped in the filter 32.

The control device 80 executes control for adding urea aqueous solution with the use of the urea aqueous solution addition valve 230 as one of the exhaust gas purification controls. In this adding control, an urea additive amount QE required to reduce NOx that is emitted from the engine 1 is calculated on the basis of the engine operating states, and the like. The valve opening state of the urea aqueous solution addition valve 230 is controlled such that the calculated urea additive amount is injected from the urea aqueous solution addition valve 230. The control device 80 estimates an actual injection amount of urea aqueous solution on the basis of the opening duration of the urea aqueous solution addition valve 230. Urea aqueous solution for reducing NOx is injected at the time when the temperature of the SCR catalyst 41 is higher than or equal to an activation temperature.

Such an injection of urea aqueous solution for reducing NOx is carried out during engine operation. When engine operation is stopped, the injection of urea aqueous solution for reducing NOx is also stopped. In this way, when engine operation is stopped, the injection of urea aqueous solution is also stopped. However, if urea aqueous solution remains in the supply passage 240 or urea aqueous solution addition valve 230 of the urea aqueous solution supply mechanism 200, there is a concern that the supply passage 240 or the urea aqueous solution addition valve 230 undergoes damage because of an increase in volume due to freeze of the urea aqueous solution. Therefore, in order to suppress such residual urea aqueous solution, the control device 80 executes the process of recovering urea aqueous solution from the supply passage 240 or the urea aqueous solution addition valve 230 after a stop of the engine.

FIG. 3 shows the procedure of the process of recovering urea aqueous solution. When the process is started, the control device 80 initially determines whether the IG switch 25 is set to an "OFF" state, that is, whether the engine is caused to stop (S100). When the IG switch 25 is not set to the "OFF" state (NO in S100), the control device 80 ends the process.

On the other hand, when the IG switch 25 is set to the "OFF" state (YES in S100), the control device 80 recovers urea aqueous solution (S110). In step S110, the control device 80 opens the urea aqueous solution addition valve 230 and rotates the pump 220 in the reverse direction just for a predetermined time. Thus, urea aqueous solution remaining in the urea aqueous solution addition valve 230 or the supply passage 240 is recovered to the tank 210 after the stop of the engine. After that, the control device 80 ends the process.

Incidentally, when urea aqueous solution is recovered from the urea aqueous solution addition valve 230 or the supply passage 240 after a stop of the engine, no urea aqueous solution is injected until the inside of the urea aqueous solution addition valve 230 is filled with urea aqueous solution even when the urea aqueous solution addition valve 230 is opened in order to inject urea aqueous solution for purifying NOx after the next start of the engine. Here, the control device 80 is configured to estimate an actual injection amount of urea aqueous solution on the basis of the opening duration of the urea aqueous solution addition valve 230, so the accuracy of estimating such an injection amount deteriorates.

Therefore, the control device 80 executes the process of previously filling urea aqueous solution into the urea aqueous solution addition valve 230 before urea aqueous solution for purifying NOx is injected after the next start of the engine, more specifically, at a start of the engine.

However, if urea aqueous solution is previously filled in this way, there is a concern that the following inconvenience occurs. That is, when a time from a start of the engine to a stop of the engine is relatively short, for example, when the operation of the engine 1 is stopped before a warm-up of the engine 1 completes, reducing agent filled in the urea aqueous solution addition valve 230 may be recovered without being injected.

In this case, there is a concern that urea aqueous solution that has adhered to the distal end of the urea aqueous solution addition valve 230 at the time of filling urea aqueous solution remains at the distal end. In addition, there is also a concern that a small amount of urea aqueous solution remains in the urea aqueous solution addition valve 230 even when urea aqueous solution is recovered. For example, there is a concern that a layer of urea aqueous solution remains at a sealed portion in the injection hole.

Urea aqueous solution remaining at the distal end or inside of the urea aqueous solution addition valve 230 in this way may form a deposit thereafter and cause a malfunction of the urea aqueous solution addition valve 230. Particularly, when engine operation having a relatively short time from a start of the engine to a stop of the engine is repeated, urea aqueous solution repeatedly remains at the distal end of the urea aqueous solution addition valve 230 at the time of filling and remains inside the urea aqueous solution addition valve 230 at the time of recovery, so formation of a deposit of urea aqueous solution at the distal end or inside of the urea aqueous solution addition valve 230 tends to be further remarkable.

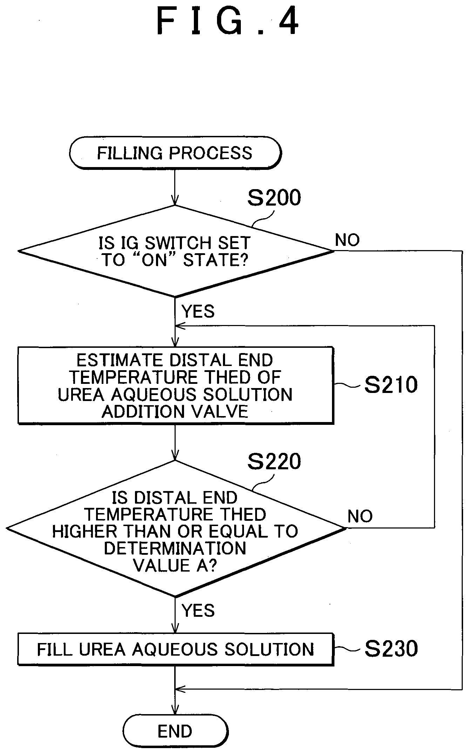

Therefore, in the present embodiment, in order to suppress formation of a deposit at the urea aqueous solution addition valve 230 that adds urea aqueous solution, the process shown in FIG. 4 is executed. FIG. 4 shows the procedure of the process of filling urea aqueous solution, which is executed by the control device 80.

When the process is started, the control device 80 initially determines whether the IG switch 25 is set to an "ON" state, that is, whether the engine is being started (S200). When the IG switch 25 is not set to the "ON" state (NO in S200), the control device 80 ends the process.

On the other hand, when the IG switch 25 is set to the "ON" state (YES in S200), the control device 80 estimates a distal end temperature THED of the urea aqueous solution addition valve 230 (S210). In step S210, the control device 80 estimates the distal end temperature THED on the basis of the second exhaust gas temperature TH2, the exhaust gas flow rate GS, the outside air temperature THout and the vehicle speed SPD. The second exhaust gas temperature TH2 indicates the temperature of exhaust gas near the urea aqueous solution addition valve 230.

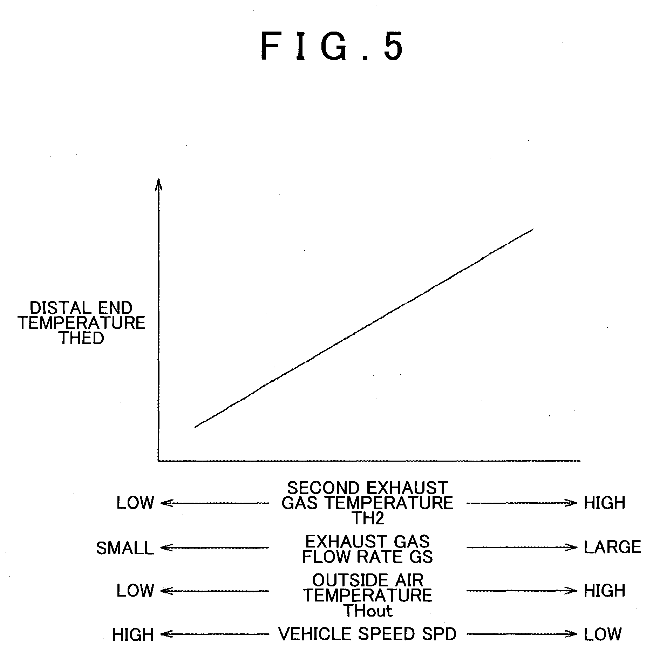

FIG. 5 shows a mode in which the distal end temperature THED is estimated. As shown in FIG. 5, the temperature of the distal end of the urea aqueous solution addition valve 230 rises as the second exhaust gas temperature TH2 rises, so an estimated value of the distal end temperature THED is set to a higher temperature as the second exhaust gas temperature TH2 rises. The amount of heat that transfers from exhaust gas to the distal end of the urea aqueous solution addition valve 230 increases as the exhaust gas flow rate GS increases, so an estimated value of the distal end temperature THED is set to a higher temperature as the exhaust gas flow rate GS increases. The temperature of the urea aqueous solution addition valve 230 rises as the outside air temperature THout rises, so an estimated value of the distal end temperature THED is set to a higher temperature as the outside air temperature THout rises. The effect of cooling the urea aqueous solution addition valve 230 by traveling wind decreases as the vehicle speed SPD decreases, so an estimated value of the distal end temperature THED is set to a higher temperature as the vehicle speed SPD decreases. The distal end temperature THED is estimated on the basis of a plurality of parameters associated with the distal end temperature THED in this way. Thus, the accuracy of estimating the distal end temperature THED is raised.

Subsequently, the control device 80 determines whether the estimated distal end temperature THED is higher than or equal to a determination value A (S220). The boiling point of the urea aqueous solution is set for the determination value A. When the distal end temperature THED is lower than the determination value A (NO in S220), the control device 80 repeats estimation of the distal end temperature THED (S210) and comparison determination between the distal end temperature THED and the determination value A (S220) until the distal end temperature THED becomes higher than or equal to the determination value A.

On the other hand, when the distal end temperature THED is higher than or equal to the determination value A (YES in S220), the control device 80 starts filling urea aqueous solution (S230). In step S230, the control device 80 opens the urea aqueous solution addition valve 230 and rotates the pump 220 in the forward direction. Thus, urea aqueous solution is filled into the urea aqueous solution addition valve 230 or the supply passage 240. When filling of urea aqueous solution into the urea aqueous solution addition valve 230 or the supply passage 240 completes, the control device 80 closes the urea aqueous solution addition valve 230 while keeping the pump 220 rotating in the forward direction. Completion of filling of urea aqueous solution may be carried out by an appropriate method. For example, it may be determined that filing of urea aqueous solution has completed on the condition that the urea aqueous solution pressure NP has reached a predetermined threshold. After that, it may also be determined that filling of urea aqueous solution has completed on the condition that the duration of rotation of the pump 220 in the forward direction has reached a predetermined time. After that, the control device 80 ends the process.

Next, the operation of the present embodiment will be described. As shown in FIG. 4, when the distal end temperature THED of the urea aqueous solution addition valve 230 is higher than or equal to the boiling point of urea aqueous solution (YES in S220), filling of urea aqueous solution into the urea aqueous solution addition valve 230 is started (S230). For example, the engine 1 is started, the distal end temperature THED gradually rises, and, at the timing at which the distal end temperature THED has reached the determination value A, filling of urea aqueous solution into the urea aqueous solution addition valve 230 is started. Alternatively, when the distal end temperature THED has already become higher than or equal to the determination value A at the timing at which the engine 1 is started, filling of urea aqueous solution into the urea aqueous solution addition valve 230 is started at the timing at which the engine 1 is started.

When the distal end temperature THED is higher than or equal to the boiling point of the urea aqueous solution, urea aqueous solution is filled. Therefore, at the time of filling urea aqueous solution into the urea aqueous solution addition valve 230, even when urea aqueous solution adheres to the distal end of the urea aqueous solution addition valve 230, the adhered urea aqueous solution vaporizes. Thus, urea aqueous solution remaining at the distal end of the urea aqueous solution addition valve 230 is suppressed. Even when a small amount of urea aqueous solution remains in the urea aqueous solution addition valve 230 at the time when urea aqueous solution is recovered, the residual urea aqueous solution vaporizes. Thus, urea aqueous solution remaining in the urea aqueous solution addition valve 230 is also suppressed. In this way, urea aqueous solution remaining at the distal end or inside of the urea aqueous solution addition valve 230 is suppressed, so formation of a deposit at the urea aqueous solution addition valve 230 due to residual urea aqueous solution is suppressed.

The distal end temperature THED of the urea aqueous solution addition valve 230 is estimated. When the estimated distal end temperature THED is higher than or equal to the boiling point of the urea aqueous solution, urea aqueous solution is filled. Thus, it is possible to appropriately fill urea aqueous solution on the basis of the estimated distal end temperature THED.

As shown in FIG. 3, after a stop of the engine where the IG switch 25 is set to the "OFF" state (YES in S100), urea aqueous solution is recovered from the urea aqueous solution addition valve 230 or the supply passage 240 (S110). Thus, damage to the urea aqueous solution addition valve 230 or the supply passage 240 due to freeze of urea aqueous solution remaining in the urea aqueous solution addition valve 230 or the supply passage 240 is suppressed.

As shown in FIG. 4, at a start of the engine where the IG switch 25 is set to the "ON" state (YES in S200), the distal end temperature THED is compared with the determination value A, and, as a result, when the distal end temperature THED is higher than or equal to the determination value A (YES in S220), urea aqueous solution is filled (S230). In this way, at a start of the engine, the process of filling urea aqueous solution into the urea aqueous solution addition valve 230 is executed. Here, urea aqueous solution for purifying NOx is injected at the time when the temperature of the SCR catalyst 41 is higher than or equal to the activation temperature as described above. The activation temperature is higher than the boiling point of the urea aqueous solution. Thus, before the temperature of the SCR catalyst 41 reaches the activation temperature, the distal end temperature THED becomes higher than or equal to the determination value A. Therefore, in advance of the injection of urea aqueous solution for purifying NOx, which is carried out after a start of the engine, it is possible to fill urea aqueous solution into the urea aqueous solution addition valve 230.

Before the injection of urea aqueous solution for purifying NOx is started in this way, urea aqueous solution is filled into the urea aqueous solution addition valve 230. Therefore, when urea aqueous solution for purifying NOx is injected, it is possible to inject urea aqueous solution immediately in association with the opening operation of the urea aqueous solution addition valve 230.

As described above, according to the present embodiment, the following advantageous effects are obtained.
(1) When the distal end temperature THED of the urea aqueous solution addition valve 230 is higher than or equal to the boiling point of the urea aqueous solution, the filling process of filling urea aqueous solution into the urea aqueous solution addition valve 230 is started by supplying urea aqueous solution to the urea aqueous solution addition valve 230. Thus, it is possible to suppress formation of a deposit at the urea aqueous solution addition valve 230 due to residual urea aqueous solution.
(2) In the filling process, the distal end temperature THED of the urea aqueous solution addition valve 230 is estimated, and, when the estimated distal end temperature THED is higher than or equal to the boiling point of the urea aqueous solution, urea aqueous solution is filled into the urea aqueous solution addition valve 230. Thus, it is possible to appropriately execute the filling process on the basis of the estimated distal end temperature THED of the urea aqueous solution addition valve 230.
(3) The above-described filling process is executed before the injection of urea aqueous solution for purifying NOx is started. Thus, when urea aqueous solution for purifying NOx is injected, it is possible to inject urea aqueous solution immediately in association with the opening operation of the urea aqueous solution addition valve 230. Therefore, for example, it is possible to raise the accuracy of estimating an actual injection amount of urea aqueous solution, which is estimated on the basis of the opening duration of the urea aqueous solution addition valve 230.
(4) Urea aqueous solution is recovered from the urea aqueous solution addition valve 230 after a stop of the engine. Therefore, it is possible to suppress damage, or the like, to the urea aqueous solution addition valve 230 due to freeze of urea aqueous solution remaining in the urea aqueous solution addition valve 230. The above-described filling process is executed at a start of the engine. Therefore, in advance of the injection of urea aqueous solution for purifying NOx, which is carried out after a start of the engine, it is possible to fill urea aqueous solution into the urea aqueous solution addition valve 230.

The above-described embodiment may be modified into the following alternative embodiments.
The boiling point of the urea aqueous solution is set for the determination value A. Other than this, a temperature near the boiling point of the urea aqueous solution may also be set for the determination value A. In this case as well, vaporization of urea aqueous solution remaining in the urea aqueous solution addition valve 230 is facilitated, so a similar advantageous effect to that of the above (1) is obtained.

The distal end temperature THED is estimated on the basis of the second exhaust gas temperature TH2, the exhaust gas flow rate GS, the outside air temperature THout and the vehicle speed SPD. Other than this, the distal end temperature THED may be estimated on the basis of at least one of the second exhaust gas temperature TH2, the exhaust gas flow rate GS, the outside air temperature THout and the vehicle speed SPD. Alternatively, the distal end temperature THED may be actually detected by a sensor, or the like.

The distal end temperature THED of the urea aqueous solution addition valve 230 is estimated. However, the temperature of another portion of the urea aqueous solution addition valve 230 correlates with the distal end temperature, so the temperature of another portion of the urea aqueous solution addition valve 230 may be estimated instead of estimating the distal end temperature THED.

In the above-described filling process, in order to fill urea aqueous solution into the urea aqueous solution addition valve 230 at the time when the temperature of the urea aqueous solution addition valve 230 is higher than or equal to the boiling point of the urea aqueous solution, the distal end temperature THED of the urea aqueous solution addition valve 230 is estimated. However, in an alternative embodiment, urea aqueous solution may be filled into the urea aqueous solution addition valve 230 at the time when the temperature of the urea aqueous solution addition valve 230 is higher than or equal to the boiling point of the urea aqueous solution.

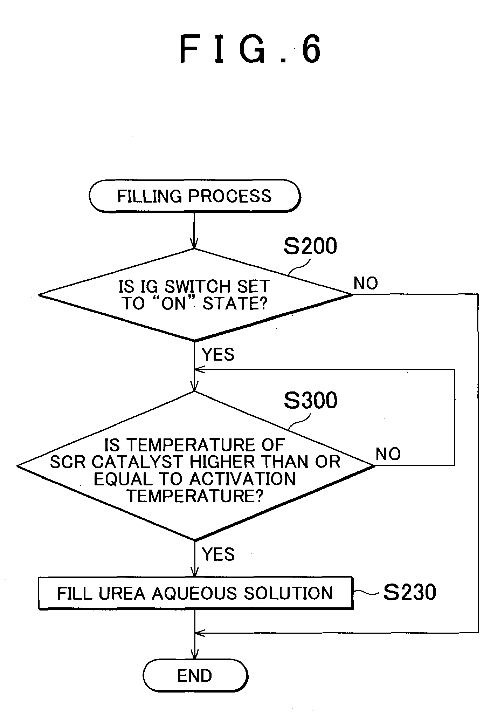

For example, when the temperature of the SCR catalyst 41 is higher than or equal to the activation temperature, the exhaust system is in a high temperature state, so the temperature of the urea aqueous solution addition valve 230 is highly likely to be higher than or equal to the boiling point of the urea aqueous solution. Therefore, urea aqueous solution may be filled at the time when the temperature of the SCR catalyst 41 is higher than or equal to the activation temperature. In the filling process according to this alternative embodiment, as shown in FIG. 6, the process of step S210 (the process of estimating the distal end temperature THED) shown in FIG. 4 is omitted. Instead of the process of step S220, the process of step S300 shown in FIG. 6 is executed. Thus, the filling process may be implemented.

As shown in FIG. 6, when it is determined in step S200 that the IG switch 25 is set to the "ON" state (YES in S200), the control device 80 determines whether the temperature of the SCR catalyst 41 is higher than or equal to the activation temperature (S300). The temperature of the SCR catalyst 41, as well as the above-described distal end temperature THED, may be estimated on the basis of the exhaust gas temperature, the exhaust gas flow rate, the outside air temperature, and the like. In addition, the accuracy of estimating the temperature of the SCR catalyst 41 may be raised by additionally considering the vehicle speed. The temperature of the SCR catalyst 41 may be actually detected by a temperature sensor, or the like.

When the temperature of the SCR catalyst 41 does not reach the activation temperature (NO in S300), the control device 80 repeats the process of step S300 until the temperature of the SCR catalyst 41 becomes higher than or equal to the activation temperature.

On the other hand, when the temperature of the SCR catalyst 41 is higher than or equal to the activation temperature (YES in S300), the control device 80 fills urea aqueous solution (S230), and ends the process. According to such an alternative embodiment as well, when the temperature of the urea aqueous solution addition valve 230 is higher than or equal to the boiling point of the urea aqueous solution, it is possible to fill urea aqueous solution into the urea aqueous solution addition valve 230.

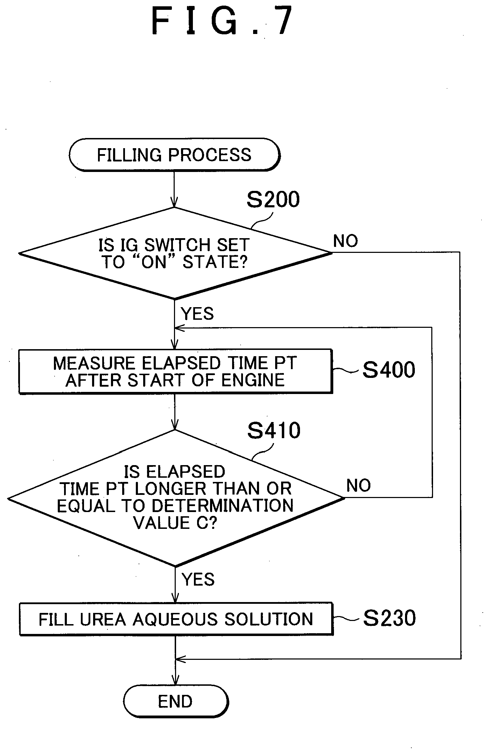

When an elapsed time from a star of the engine is long to some extent, the exhaust system is in a high temperature state because of combustion gas, so the temperature of the urea aqueous solution addition valve 230 is highly likely to be higher than or equal to the boiling point of the urea aqueous solution. Therefore, urea aqueous solution may be filled at the time when an elapsed time from a start of the engine is longer than or equal to a predetermined time. The filling process according to this alternative embodiment may be implemented by executing the process of step S400 and the process of step S410 shown in FIG. 7 instead of the process of step S210 and the process of step S220 shown in FIG. 4.

As shown in FIG. 7, when it is determined in step S200 that the IG switch 25 is set to the "ON" state (YES in S200), the control device 80 measures an elapsed time PT after the engine is started (S400).

Subsequently, the control device 80 determines whether the elapsed time PT is longer than or equal to a determination value C (S410). The determination value C is set such that it is possible to adequately determine that the temperature of the urea aqueous solution addition valve (more suitably, the distal end temperature of the urea aqueous solution addition valve 230) is higher than or equal to the boiling point of the urea aqueous solution on the basis of the fact that the elapsed time PT is longer than or equal to the determination value C. A rise in the temperature of the exhaust system after a start of the engine changes to an engine temperature (replaceable by the coolant temperature of the engine 1) at the start of the engine, the outside air temperature THout, or the like. Therefore, by correcting the determination value C with the engine temperature, the outside air temperature THout, or the like, the accuracy of determining whether the temperature of the urea aqueous solution addition valve 230 is higher than or equal to the boiling point of the urea aqueous solution improves.

When the elapsed time PT is shorter than the determination value C (NO in S410), the control device 80 repeats measuring the elapsed time PT (S400) and comparison determination between the elapsed time PT and the determination value C (S410) until the elapsed time PT becomes longer than or equal to the determination value C.

On the other hand, when the elapsed time PT becomes longer than or equal to the determination value C (YES in S410), the control device 80 fills urea aqueous solution (S230), and ends the process. According to such an alternative embodiment as well, when the temperature of the urea aqueous solution addition valve 230 is higher than or equal to the boiling point of the urea aqueous solution, it is possible to fill urea aqueous solution into the urea aqueous solution addition valve 230.

The above-described filling process is executed at a start of the engine; however, the timing at which the filling process is executed may be changed. For example, the above-described filling process may be executed after a start of the engine and immediately before an injection of urea aqueous solution for purifying NOx is started. In this case as well, when urea aqueous solution for purifying fuel is injected, it is possible to inject urea aqueous solution immediately in association with the opening operation of the urea aqueous solution addition valve 230. Therefore, for example, it is possible to raise the accuracy of estimating an actual injection amount of urea aqueous solution, which is estimated on the basis of the opening duration of the urea aqueous solution addition valve 230.

When urea aqueous solution is recovered from the supply passage 240, the pump 220 is rotated in the reverse direction; however, urea aqueous solution may be recovered in another mode. For example, a selector valve, or the like, that changes the flow direction of urea aqueous solution in the supply passage 240 may be provided in the supply passage 240.

Urea aqueous solution is used as a reducing agent; instead, another liquid reducing agent may be used.

## Claims

1. An exhaust emission control system for an internal combustion engine, comprising:
a catalyst (41) provided in an exhaust passage of the internal combustion engine and configured to purify exhaust gas by being supplied with reducing agent;
a reducing agent supply mechanism (200) having an addition valve (230) configured to inject the reducing agent to the exhaust passage, the reducing agent supply mechanism (200) being configured to supply the reducing agent to the addition valve (230) and recover the reducing agent from the addition valve (230); and
an electronic control unit (80) configured to:
control an operation of the reducing agent supply mechanism (200); and
**characterized in that** the electronic control unit (80) is further configured to execute a filling process of filling the reducing agent into the addition valve (230) by supplying the reducing agent to the addition valve (230) when a temperature of the addition valve (230) is higher than or equal to a boiling point of the reducing agent.

2. The exhaust emission control system according to claim 1, wherein
the electronic control unit (80) is configured to:
estimate the temperature of the addition valve (230); and
execute the filling process when the temperature of the addition valve (230) is higher than or equal to the boiling point of the reducing agent.

3. The exhaust emission control system according to claim 1 or 2, wherein
the electronic control unit (80) is configured to execute the filling process before an injection of the reducing agent for purifying exhaust gas is started.

4. The exhaust emission control system according to claim 3, wherein
the electronic control unit (80) is configured to recover the reducing agent from the addition valve (230) after a stop of the engine and execute the filling process at a start of the engine.

5. A control method for an exhaust emission control system for an internal combustion engine, the exhaust emission control system including a catalyst (41) and a reducing agent supply mechanism (200), the catalyst (41) being provided in an exhaust passage of the internal combustion engine and configured to purify exhaust gas by being supplied with reducing agent, the reducing agent supply mechanism (200) having an addition valve (230) configured to inject the reducing agent to the exhaust passage, the reducing agent supply mechanism (200) being configured to supply the reducing agent to the addition valve (230) and recover the reducing agent from the addition valve (230), the control method **characterized by** comprising:
executing a filling process of filling the reducing agent into the addition valve (230) by supplying the reducing agent to the addition valve (230) with an use of the reducing agent supply mechanism when a temperature of the addition valve (230) is higher than or equal to a boiling point of the reducing agent.

6. The control method according to claim 5, wherein
the filling process is executed when the temperature of the addition valve (230) is estimated and then the temperature of the addition valve (230) is higher than or equal to the boiling point of the reducing agent.

7. The control method according to claim 5 or 6, wherein
the filling process is executed before an injection of the reducing agent for purifying exhaust gas is started.

8. The control method according to claim 7, wherein
the reducing agent is recovered from the addition valve (230) after a stop of the engine, and the filling process is executed at a start of the engine.

## Patentansprüche

1. Abgasemissionssteuerungssystem für einen Verbrennungsmotor, umfassend:
einen Katalysator (41), der in einer Abgaspassage des Verbrennungsmotors bereitgestellt ist und ausgebildet ist, um Abgas zu reinigen, indem es mit Reduktionsmittel versorgt wird,
einen Reduktionsmittelzuführmechanismus (200), der ein Zugabeventil (230) aufweist, das ausgebildet ist, um das Reduktionsmittel in die Abgaspassage einzuspritzen, wobei der Reduktionsmittelzuführmechanismus (200) ausgebildet ist, um das Reduktionsmittel dem Zugabeventil (230) zuzuführen und das Reduktionsmittel von dem Zugabeventil (230) wiederzugewinnen, und
eine elektronische Steuerungseinheit (80), die ausgebildet ist, um:
einen Betrieb des Reduktionsmittelzuführmechanismus (200) zu steuern, und
**dadurch gekennzeichnet, dass** die elektronische Steuerungseinheit (80) ferner ausgebildet ist, um einen Füllprozess des Füllens des Reduktionsmittels in das Zugabeventil (230) durch Zuführen des Reduktionsmittels zu dem Zugabeventil (230) auszuführen, wenn eine Temperatur des Zugabeventils (230) größer oder gleich einem Siedepunkt des Reduktionsmittels ist.

2. Abgasemissionssteuerungssystem nach Anspruch 1, wobei
die elektronische Steuerungseinheit (80) ausgebildet ist, um:
die Temperatur des Zugabeventils (230) zu schätzen und
den Füllprozess auszuführen, wenn die Temperatur des Zugabeventils (230) größer oder gleich dem Siedepunkt des Reduktionsmittels ist.

3. Abgasemissionssteuerungssystem nach Anspruch 1 oder 2, wobei
die elektronische Steuerungseinheit (80) ausgebildet ist, um den Füllprozess auszuführen, bevor ein Einspritzen des Reduktionsmittels zum Reinigen von Abgas gestartet wird.

4. Abgasemissionssteuerungssystem nach Anspruch 3, wobei
die elektronische Steuerungseinheit (80) ausgebildet ist, um das Reduktionsmittel von dem Zugabeventil (230) nach einem Stopp des Motors wiederzugewinnen und den Füllprozess bei einem Start des Motors auszuführen.

5. Steuerungsverfahren für ein Abgasemissionssteuerungssystem für einen Verbrennungsmotor, wobei das Abgasemissionssteuerungssystem einen Katalysator (41) und einen Reduktionsmittelzuführmechanismus (200) aufweist, wobei der Katalysator (41) in einer Abgaspassage des Verbrennungsmotors bereitgestellt ist und ausgebildet ist, um Abgas zu reinigen, indem es mit Reduktionsmittel versorgt wird, wobei der Reduktionsmittelzuführmechanismus (200) ein Zugabeventil (230) aufweist, das ausgebildet ist, um das Reduktionsmittel in die Abgaspassage einzuspritzen, wobei der Reduktionsmittelzuführmechanismus (200) ausgebildet ist, um das Reduktionsmittel dem Zugabeventil (230) zuzuführen und das Reduktionsmittel von dem Zugabeventil (230) wiederzugewinnen, wobei das Steuerungsverfahren **dadurch gekennzeichnet ist, dass** es umfasst:
Ausführen eines Füllprozesses des Füllens des Reduktionsmittels in das Zugabeventil (230) durch Zuführen des Reduktionsmittels zu dem Zugabeventil (230) unter Verwendung des Reduktionsmittelzuführmechanismus, wenn eine Temperatur des Zugabeventil (230) größer oder gleich einem Siedepunkt des Reduktionsmittels ist.

6. Steuerungsverfahren nach Anspruch 5, wobei
der Füllprozess ausgeführt wird, wenn die Temperatur des Zugabeventils (230) geschätzt wird und dann die Temperatur des Zugabeventils (230) größer oder gleich dem Siedepunkt des Reduktionsmittels ist.

7. Steuerungsverfahren nach Anspruch 5 oder 6, wobei
der Füllprozess ausgeführt wird, bevor ein Einspritzen des Reduktionsmittels zum Reinigen von Abgas gestartet wird.

8. Steuerungsverfahren nach Anspruch 7, wobei
das Reduktionsmittel von dem Zugabeventil (230) nach einem Stopp des Motors wiedergewonnen und der Füllprozess bei einem Start des Motors ausgeführt wird.

## Revendications

1. Système de commande d'émission d'échappement pour un moteur à combustion interne, comportant :
un catalyseur (41) prévu dans un passage d'échappement du moteur à combustion interne et configuré pour purifier le gaz d'échappement en étant alimenté avec de l'agent de réduction ;
un mécanisme d'alimentation en agent de réduction (200) ayant une soupape d'addition (230) configurée pour injecter l'agent de réduction dans le passage d'échappement, le mécanisme d'alimentation en agent de réduction (200) étant configuré pour délivrer l'agent de réduction à la soupape d'addition (230) et pour récupérer l'agent de réduction provenant de la soupape d'addition (230) ; et
une unité de commande électronique (80) configurée pour :
commander un fonctionnement du mécanisme d'alimentation en agent de réduction (200) ; et
**caractérisé en ce que** l'unité de commande électronique (80) est en outre configurée pour exécuter un processus de remplissage destiné à remplir d'agent de réduction la soupape d'addition (230) en délivrant l'agent de réduction à la soupape d'addition (230) quand une température de la soupape d'addition (230) est supérieure ou égale à un point d'ébullition de l'agent de réduction.

2. Système de commande d'émission d'échappement selon la revendication 1, dans lequel
l'unité de commande électronique (80) est configurée pour :
estimer la température de la soupape d'addition (230) ; et
exécuter le processus de remplissage quand la température de la soupape d'addition (230) est supérieure ou égale au point d'ébullition de l'agent de réduction.

3. Système de commande d'émission d'échappement selon la revendication 1 ou 2, dans lequel
l'unité de commande électronique (80) est configurée pour exécuter le processus de remplissage avant qu'une injection de l'agent de réduction pour purifier le gaz d'échappement soit commencée.

4. Système de commande d'émission d'échappement selon la revendication 3, dans lequel
l'unité de commande électronique (80) est configurée pour récupérer l'agent de réduction provenant de la soupape d'addition (230) après un arrêt du moteur et pour exécuter le processus de remplissage au démarrage du moteur.

5. Procédé de commande pour un système de commande d'émission d'échappement pour un moteur à combustion interne, le système de commande d'émission d'échappement comprenant un catalyseur (41) et un mécanisme d'alimentation en agent de réduction (200), le catalyseur (41) étant prévu dans un passage d'échappement du moteur à combustion interne et configuré pour purifier le gaz d'échappement en étant alimenté avec de l'agent de réduction, le mécanisme d'alimentation en agent de réduction (200) ayant une soupape d'addition (230) configurée pour injecter l'agent de réduction dans le passage d'échappement, le mécanisme d'alimentation en agent de réduction (200) étant configuré pour délivrer l'agent de réduction à la soupape d'addition (230) et pour récupérer l'agent de réduction provenant de la soupape d'addition (230), le procédé de commande étant **caractérisé en ce qu'**il comporte le fait de :
exécuter un processus de remplissage destiné à remplir d'agent de réduction la soupape d'addition (230) en délivrant l'agent de réduction à la soupape d'addition (230) avec une utilisation du mécanisme d'alimentation en agent de réduction quand une température de la soupape d'addition (230) est supérieure ou égale à un point d'ébullition de l'agent de réduction.

6. Procédé de commande selon la revendication 5, selon lequel
le processus de remplissage est exécuté quand la température de la soupape d'addition (230) est estimée et la température de la soupape d'addition (230) est alors supérieure ou égale au point d'ébullition de l'agent de réduction.

7. Procédé de commande selon la revendication 5 ou 6, selon lequel
le processus de remplissage est exécuté avant qu'une injection de l'agent de réduction pour purifier le gaz d'échappement soit commencée.

8. Procédé de commande selon la revendication 7, selon lequel
l'agent de réduction est récupéré de la soupape d'addition (230) après un arrêt du moteur, et le processus de remplissage est exécuté au démarrage du moteur.
